# EUROPÄISCHE PATENTANMELDUNG

(11) **EP 4 803 721 A1**
(43) Veröffentlichungstag der Anmeldung: **09.09.2026**
(21) Anmeldenummer: 25161551.4
(22) Anmeldetag: 04.03.2025
(51) Int. Cl.: E04G 9/05, E04G 11/06, E04G 11/38, E04G 9/02

(54) **VERFAHREN ZUM HERSTELLEN EINES SCHALUNGSELEMENTS**

(71) Anmelder: DOKA GmbH, 3300 Amstetten (AT)
(72) Erfinder: MEINSCHAD, Thomes, 3300 Amstetten (AT); GRUBER, Gerhard, 3300 Amstetten (AT); STRANNER, Jürgen, 3300 Amstetten (AT); MAURITZ, Raimund, 3300 Amstetten (AT)
(74) Vertreter: SONN Patentanwälte GmbH & Co KG

(57) **Zusammenfassung**

Die Erfindung betrifft ein Verfahren zum Herstellen eines Schalungselements (1) mit den Schritten: Anordnen eines Schalungselementkerns (2) in einer Form (11), Füllen der Form (11) mit einem Ummantelungsmaterial (10) und Ummanteln des Schalungselementkerns (2) mit dem Ummantelungsmaterial (10), wodurch das Schalungselement (1) gebildet wird, wobei das Füllen der Form (11) und das Ummanteln des Schalungselementkerns (2) durch Fließpressen bewerkstelligt wird.

## Beschreibung

Die Erfindung betrifft ein Verfahren zum Herstellen eines Schalungselements mit den Schritten:
Anordnen eines Schalungselementkerns in einer Form,
Füllen der Form mit einem Ummantelungsmaterial und Ummanteln des Schalungselementkerns mit dem Ummantelungsmaterial, wodurch das Schalungselement gebildet wird.

Ferner betrifft die Erfindung ein Schalungselement und eine Rahmenschalung mit einem solchen Schalungselement.

Schalungselemente bzw. aus Schalungselementen zusammengesetzte Schalungen werden im Betonbau als Negativform einer späteren Betonoberfläche verwendet. Neben Schalungselementen aus Holz sind im Stand der Technik auch Schalungselemente aus verschiedenen Kunststoff-Materialien bekannt.

Schalungselemente werden oft in einen metallischen Rahmen eingelegt. Dieser metallische Rahmen kann einerseits dazu dienen, die Steifigkeit zu erhöhen. Zudem kann der metallische Rahmen dazu genutzt werden, die Schalungselemente mit benachbarten Schalungselementen bzw. Bauwerksabschnitten zu verbinden. Da bekannte Schalungselemente oftmals eine deutlich höhere Wärmeausdehnung zeigen als der Rahmen, werden häufig Silikonfugen zwischen dem Schalungselement und dem Rahmen vorgesehen, um unterschiedliche Wärmeausdehnungen auszugleichen. Beim Füllen der Schalung mit Beton kann jedoch Silikon aus den Fugen gedrückt werden, und Beton kann in die dadurch entstehende Lücke fließen, was zu Abplatzungen im Beton führen kann.

In KR 10-2010631 B1 ist eine Kunststoffschalung beschrieben. Die Schalung enthält einen Kern aus einem kontinuierlich faserverstärkten Thermoplasten (continuous fibre reinforced thermoplast, CFT), welcher zur Verstärkung der Schalung dient. Dieser Kern wird in einem Spritzgussverfahren mit einem langfaserverstärkten Thermoplasten (LFT) umgossen, welcher naturgemäß eine geringere Festigkeit und Steifigkeit aufweist als der Kern aus CFT. Die so erhaltene Basisplatte aus LFT weist auf einer Seite eine Vielzahl von Längs- und Querrippen auf und wird in einem Metallrahmen befestigt. Nachteilig ist dabei das relativ hohe Gewicht des Kerns aus CFT. Ein weiterer Nachteil ist, dass CFT, auch bekannt als Organoblech, ein relativ hochpreisiges Material ist.

Zudem sind bei dem angewandten Spritzgussverfahren sehr hohe Drücke notwendig, die mit einem hohen Energieverbrauch und folglich auch hohen Herstellungskosten einhergehen. Neben sehr hohen Drücken von bis zu 2000 bar und Temperaturen (typischerweise 200 °C bis 300 °C) treten beim Spritzgießen auch sehr hohe Scherkräfte auf. Das kann zu einer hohen mechanischen Belastung des Kerns und des umgossenen LFT führen. Daher muss der Kern bei der Fertigung mittels Spritzguss aus einem sehr stabilen Material, wie beispielsweise CFT, bestehen. Beim Spritzgießen sind außerdem der Volumenanteil und die Länge der Verstärkungsfasern durch die Baugröße der Injektoren und die auftretenden Scherkräfte begrenzt. Durch die Scherkräfte können die Fasern, insbesondere Langfasern mit einer Länge von 5 mm und mehr, beschädigt bzw. zerkleinert werden. Aus diesem Grund sind beim Spritzguss Fasern mit maximal 2 mm Faserlänge üblich. Außerdem können hohe Temperaturen zu einem Abbau von Polymermolekülen des Thermoplasten führen.

Die ES 2 292 297 B1 offenbart ein Verfahren zur Fertigung einer Schalungsplatte mit einem Kern, beispielsweise einem Holzkern, der mit einer Schicht aus faserverstärktem Kunststoff überzogen ist. An der Kante der Schalungsplatte wird eine Elastomerschicht aufgebracht, die beim Einlegen der Schalungsplatte in einen Rahmen dazu dient, den Spalt zwischen Schalungsplatte und Rahmen abzudichten.

Demgegenüber besteht die Aufgabe der vorliegenden Erfindung darin, zumindest einzelne Nachteile des Standes der Technik zu lindern oder zu beseitigen. Die Erfindung setzt sich bevorzugt zum Ziel, ein kostengünstiges Schalungselement bereitzustellen, welches ein geringeres Gewicht und zumindest vergleichbare oder sogar bessere mechanische Eigenschaften aufweist, als die Schalungselemente des Standes der Technik. Ein weiteres Ziel der Erfindung besteht darin, ein schnelles, günstiges Fertigungsverfahren für Schalungselemente bereitzustellen, bei dem die mechanische Beanspruchung des Schalungselementkerns möglichst gering gehalten wird.

Diese Aufgabe wird durch ein Verfahren zum Herstellen eines Schalungselements nach Anspruch 1, ein Schalungselement nach Anspruch 9 und eine Rahmenschalung nach Anspruch 15 gelöst. Bevorzugte Ausführungsformen der Erfindung sind in den abhängigen Ansprüchen angegeben.

Erfindungsgemäß wird das Füllen der Form und das Ummanteln des Schalungselementkerns durch Fließpressen bewerkstelligt.

Unter Ummanteln wird in diesem Zusammenhang insbesondere ein wenigstens teilweises Bedecken der Oberfläche des Schalungselementkerns mit dem Ummantelungsmaterial verstanden. Die Oberfläche des Schalungselementkerns kann dabei vollständig vom Ummantelungsmaterial bedeckt werden, vorzugsweise können jedoch, insbesondere an der der Rückseite des Schalungselementkerns, auch Bereiche ausgespart werden

Als Rückseite des Schalungselements gilt im Kontext dieser Offenbarung jene Seite, die bei der bestimmungsgemäßen Verwendung des Schalungelements der Betonoberfläche abgewandt ist. Als Vorderseite des Schalungselements gilt im Kontext dieser Offenbarung jene Seite, die bei der bestimmungsgemäßen Verwendung des Schalungelements der Betonoberfläche zugewandt ist und vorzugsweise mit der Betonoberfläche in Kontakt steht.

Als Rückseite des Schalungselementkerns gilt im Kontext dieser Offenbarung jene Seite des Schalungselementkerns, die der Rückseite des Schalungselements zugewandt ist. Als Vorderseite des Schalungselementkerns gilt im Kontext dieser Offenbarung jene Seite des Schalungselementkerns, die der Vorderseite des Schalungselements zugewandt ist.

Das Ummantelungsmaterial hat beim Fließpressen bevorzugt eine Temperatur zwischen 240°C und 300 °C, mehr bevorzugt zwischen 260 °C und 280 °C und noch mehr bevorzugt zwischen 275 °C und 280 °C.

Beim Fließpressen wird das Ummantelungsmaterial insbesondere durch Anwendung von Druck und Temperatur zum Fließen gebracht, sodass die Form mit Ummantelungsmaterial gefüllt wird und der Schalungselementkern ummantelt wird. Hierfür kann beispielsweise eine Vertikalpresse verwendet werden. Die Absolutdrücke beim Fließpressen liegen bevorzugt zwischen 50 und 300 bar, mehr bevorzugt zwischen 50 und 100 bar und noch mehr bevorzugt zwischen 50 und 60 bar. Insbesondere wenn ein Schalungselementkern verwendet wird, der Sperrholz aufweist, vorzugsweise der aus Sperrholz besteht, ist es vorteilhaft, wenn der Absolutdruck beim Fließpressen nicht zu hoch ist. Bevorzugt beträgt der Absolutdruck bei Fließpressen in diesem Fall maximal 70 bar, mehr bevorzugt maximal 60 bar.

Die beim Fließpressen erreichten Drücke sind wesentlich geringer als jene beim Spritzgießen und sind vorzugsweise auf die mechanische Stabilität des Schalungselementkerns, der beispielsweise Sperrholz aufweisen kann, abgestimmt. Beim Spritzgießen wird das Rohmaterial hingegen unter hohem Druck durch eine enge Düse in die Spritzgussform gepresst, es werden Drücke zwischen 500 und 2000 bar erreicht. Zudem wirken beim Fließpressen vorzugsweise geringere Scherkräfte auf das Ummantelungsmaterial und auf den Schalungselementkern, als bei einem vergleichbaren Spritzgussverfahren.

Das Fließpressen ermöglicht daher eine besonders materialschonende Verarbeitung, sodass bei der Materialauswahl für den Schalungselementkern wesentlich geringere Anforderungen an die mechanische Stabilität des Materials, insbesondere gegen Druck- und Scherkräfte, bestehen, als bei üblichen Spritzgussverfahren. So kann anstatt eines teuren und schweren CFT-Kerns ein vergleichsweise kostengünstiger Leichtkern, beispielsweise aus Kunststoff, vorzugweise aus geschäumtem Kunststoff, oder aus einem Weichholz, verwendet werden. Ein solcher Leichtkern könnte durch die beim Spritzgießen auftretenden hohen Drücke und Scherkräfte beschädigt oder zerstört werden.

Vorzugsweise ist eine Form für das erfindungsgemäße Fließpressverfahren wesentlich weniger komplex und daher vorzugsweise auch wesentlich kostengünstiger als eine Form für ein Spritzgussverfahren zur Herstellung eines vergleichbaren Schalungselements. Daher sind bei dem erfindungsgemäßen Fließpressverfahren die Produktionskosten für ein Schalungselement vorzugsweise niedriger als bei einem entsprechenden Spritzgussverfahren.

Das Ummantelungsmaterial enthält vorzugsweise einen thermoplastischen Kunststoff. Bevorzugt enthält das Ummantelungsmaterial Verstärkungsfasern, beispielsweise Glasfasern oder Karbonfasern.

Das Fließpressen erweitert zudem die Möglichkeiten bei der Auswahl des Ummantelungsmaterials. Insbesondere aufgrund der, im Vergleich zum Spritzgießen, geringeren Scherkräfte kann das Ummantelungsmaterial wesentlich längere Verstärkungsfasern enthalten, und somit eine wesentlich höhere mechanische Stabilität aufweisen. Die im Ummantelungsmaterial enthaltenen Verstärkungsfasern können eine mittlere Länge zwischen 2 mm und 25 mm aufweisen, bevorzugt von 5 bis 20 mm, vorzugsweise zwischen 5 mm und 10 mm. Beim Spritzgießen ist die Faserlänge hingegen auf höchstens 2 mm begrenzt. Die Festigkeit eines faserverstärkten Kunststoffs steigt mit der Faserlänge. Die mittlere Länge der im Ummantelungsmaterial enthaltenen Verstärkungsfasern kann beispielsweise mithilfe von Computertomographie bestimmt werden.

Würde man dennoch ein Ummantelungsmaterial mit längeren Verstärkungsfasern mittels Spritzguss verarbeiten, so würden die Verstärkungsfasern durch die auftretenden hohen Scherkräfte zumindest teilweise zerkleinert werden, sodass die mechanische Stabilität, insbesondere die Festigkeit, des Ummantelungsmaterials reduziert wäre. Ein durch das erfindungsgemäße Verfahren mittels Fließpressen hergestelltes Schalungselement kann bessere mechanische Eigenschaften, insbesondere eine höhere Festigkeit, als ein mittels Spritzgießen hergestelltes Schalungselement aufweisen, das den gleichen Schalungselementkern und das gleiche Ummantelungsmaterial enthält.

Überraschenderweise kann durch die Verwendung eines stabileren Ummantelungsmaterials der mit dem Einsatz eines Leichtkerns einhergehende Festigkeitsverlust des Schalungselements (über-)kompensiert werden. Durch das erfindungsgemäße Verfahren lässt sich also ein Schalungselement herstellen, das leichter ist als die im Stand der Technik bekannten Schalungselemente, aber mindestens gleichwertige mechanische Eigenschaften, insbesondere eine vergleichbare oder höhere Festigkeit, aufweist.

Wird dennoch ein sehr stabiler Schalungselementkern, wie der aus dem Stand der Technik bekannte CFT-Kern, verwendet, kann dafür die Menge an Ummantelungsmaterial reduziert werden, wodurch auch eine Gewichtseinsparung bei gleichbleibender Festigkeit erreicht werden kann. Alternativ oder zusätzlich kann auch der stabile Schalungselementkern dünner und damit leichter ausgeführt werden.

Vorzugsweise wird vor dem Fließpressen eine definierte Menge Ummantelungsmaterial direkt in der Form und/oder auf dem Schalungselementkern platziert. Die definierte Menge ist vorzugsweise ausreichend, um die Form, in der sich der Schalungselementkern befindet, im Wesentlichen vollständig zu füllen.

Bei einer bevorzugten Ausführungsform fließt das Ummantelungsmaterial beim Fließpressen durch Aussparungen des Schalungselementkerns von einer Vorderseite des Schalungselements zu einer Rückseite des Schalungselements oder umgekehrt.

Damit wird erreicht, dass das Ummantelungsmaterial an der Vorderseite des Schalungselements durch die Aussparungen mit dem Ummantelungsmaterial an der Rückseite des Schalungselements verbunden ist, wodurch die mechanische Stabilität, insbesondere die Festigkeit, des Schalungselements weiter erhöht wird. Durch die Aussparungen ergibt sich weiters der Vorteil, dass vor dem Fließpressen nur auf einer Seite des Schalungselementkerns Ummantelungsmaterial platziert werden muss, da das Ummantelungsmaterial während des Fließpressens durch die Aussparungen auf die gegenüberliegende Seite des Schalungselements fließen und die dort befindlichen Teile der Form ausfüllen kann. Die Aussparungen sind vorzugsweise gleichmäßig auf dem Schalungselementkern verteilt. Die Aussparungen können beispielsweise Bohrlöcher sein.

Bei einer bevorzugten Ausführungsform wird beim Fließpressen mindestens ein vorzugsweise im Wesentlichen senkrecht von der Rückseite des Schalungselements abstehendes Befestigungselement aus dem Ummantelungsmaterial geformt. Das Befestigungselement weist vorzugsweise eine längliche Form auf und ist vorzugsweise zylinderförmig.

Das Befestigungselement kann beispielsweise ein Schraubdom oder Schweißdom sein, über welchen das Schalungselement an einem Rahmen festgeschraubt oder verschweißt werden kann.

Das Befestigungselement kann beispielsweise als Thermoniete genutzt werden, um das Schalungselement an einem Rahmen festzunieten. Dafür kann beispielsweise ein längliches Befestigungselement durch eine Öffnung im Rahmen geführt werden und durch Anwendung von Wärme oder Ultraschall, beispielsweise mithilfe einer Sonotrode, erweicht oder geschmolzen werden, sodass das Befestigungselement zu einer pilzförmigen Niete verformt wird, wobei der Pilzkopf einen größeren Durchmesser aufweist, als die Öffnung im Rahmen.

Vorzugsweise befindet sich das mindestens eine Befestigungselement direkt über einer Aussparung des Schalungselementkerns, sodass das Ummantelungsmaterial, welches durch die Aussparung fließt, eine direkte Verbindung des an der Vorderseite des Schalungselements befindlichen Ummantelungsmaterials mit dem Befestigungselement ausbildet. So können Kräfte, die auf das Befestigungselement wirken, direkt auf das an der Vorderseite des Schalungselements befindliche Ummantelungsmaterial übertragen werden. Der Schalungselementkern wird dabei nur minimal belastet.

Bei Bedarf können weitere Befestigungselemente auf die fertige Platte aufgeschweißt werden.

Bei einer bevorzugten Ausführungsform wird beim Fließpressen an der Rückseite des Schalungselements eine Stützstruktur aus dem Ummantelungsmaterial geformt. Die Stützstruktur kann zur Verbesserung der Statik und der Formstabilität des Schalungselements beitragen. Die Stützstruktur kann beispielsweise als Gegenzug gegen eine Verkrümmung des Schalungselements dienen. Die Stützstruktur kann beispielsweise mehrere Längs- und Querrippen aufweisen. Durch Variation von Anzahl, Höhe und Stärke der Längs- und Querrippen ist eine individuelle Gestaltung der Rippen möglich.

Vorzugsweise befindet sich die Stützstruktur direkt über mindestens einer Aussparung, vorzugsweise über mehreren Aussparungen, des Schalungselementkerns, sodass das Ummantelungsmaterial, welches durch die Aussparung fließt, eine direkte Verbindung des an der Vorderseite des Schalungselements befindlichen Ummantelungsmaterials mit der Stützstruktur ausbildet. So können Kräfte, die auf die Vorderseite des Schalungselements wirken, direkt auf die an der Rückseite des Schalungselements befindliche Stützstruktur übertragen werden. Der Schalungselementkern wird dabei nur minimal belastet.

Bei einer bevorzugten Ausführungsform ist die Rückseite des Schalungselementkerns, abgesehen von den Befestigungselementen und der Stützstruktur, im Wesentlichen frei von Ummantelungsmaterial, wodurch Ummantelungsmaterial eingespart wird. Durch eine geschickte Anordnung der Stützstruktur und der Befestigungselemente und deren Verbindung mit dem an der Vorderseite des Schalungselements befindlichen Ummantelungsmaterial über die Aussparungen kann dennoch ein Schalungselement mit hoher mechanischer Stabilität, insbesondere mit hoher Festigkeit, gefertigt werden, welches zugleich ein noch geringeres Gewicht aufweist.

Die Stützstruktur und/oder das Befestigungselement kann mithilfe einer geeigneten Form auf der Rückseite des Schalungselements ausgebildet werden, sodass die Vorderseite des Schalungselements weitgehend glatt ist. In einer Schalung ist die Vorderseite des Schalungselements in Kontakt mit Beton. Mit einer glatten Vorderseite kann daher eine besonders makellose Betonoberfläche erreicht werden.

Bei einer bevorzugten Ausführungsform wird zumindest eine Kantenfläche des Schalungselementkerns beim Fließpressen vollflächig mit dem Ummantelungsmaterial ummantelt. Dadurch wird die Kantenfläche vor äußeren Einflüssen, insbesondere vor Feuchtigkeit und vor mechanischer Beschädigung, geschützt. Dies ist vor allem dann vorteilhaft, wenn ein Schalungselementkern verwendet wird, der aus einem, insbesondere an der Kantenfläche, saugfähigen und/oder hygroskopischen Material besteht. Ein solcher Schalungselementkern kann beispielsweise eine Sperrholzplatte sein, die an ihrer Vorder- und Rückseite oberflächenbehandelt wurde, deren Kantenfläche jedoch durch unbehandelte Schnittflächen gebildet wird.

Die Kantenfläche des Schalungselementkerns ist jener Teil der Oberfläche des Schalungselementkerns, der von der Außenkante der Vorderseite und der Außenkante der Rückseite des Schalungselementkerns begrenzt wird. Bei einem in Draufsicht rechteckigen Schalungselementkern ist die Kantenfläche aus zwei Längskantenflächen und zwei Querkantenflächen zusammengesetzt, die jeweils im Wesentlichen orthogonal zur Vorderseite und zur Rückseite des Schalungselementkerns stehen.

Bei einer bevorzugten Ausführungsform ist der Schalungselementkern ein Leichtkern. Damit kann das Gesamtgewicht des Schalungselements reduziert werden. Die Verwendung eines Leichtkerns wird insbesondere durch die besonders schonende Formung des Schalungselements mittels Fließpressen gemäß der Erfindung ermöglicht. Da beim Fließpressen keine hohen Drücke auf den Schalungselementkern wirken, kann ein leichtes Material mit vergleichsweise geringer Druckbeständigkeit verwendet werden.

Bei einer bevorzugten Ausführungsform enthält der Leichtkern Holz und/oder einen, vorzugsweise geschäumten, Kunststoff.

Das im Leichtkern verwendete Holz kann insbesondere auch ein Weichholz, wie Birkenholz, Fichtenholz oder Pappelholz sein, da das Fließpressen nur geringe Anforderungen an die mechanische Stabilität, insbesondere an die Druckbeständigkeit, des Holzes stellt.

Vorzugsweise enthält der Leichtkern ein Sperrholz, beispielsweise Birken-, Fichten-, oder Pappelsperrholz. Sperrholz weist bei gleichem Gewicht eine bessere mechanische Stabilität auf als Massivholz.

Alternativ kann der Leichtkern auch Spanholz enthalten. Der Leichtkern kann beispielsweise eine OSB-Platte aufweisen. Spanholz, insbesondere die OSB-Platte, stellt eine besonders preisgünstige Alternative dar, kann nachhaltig aus Recyclingmaterial oder Holzabfällen hergestellt werden und weist dennoch eine relativ gute mechanische Stabilität auf.

Der im Leichtkern verwendete Kunststoff umfasst bevorzugt ein Polyolefin, mehr bevorzugt Polypropylen. Der Kunststoff kann auch Recyclingkunststoff enthalten. Vorzugsweise umfasst der Kunststoff ein geschlossenzellig geschäumtes Polyolefin, beispielsweise ein geschlossenzellig geschäumtes Polypropylen. Aufgrund der geringen Wasseraufnahme des Polyolefins quillt der Leichtkern nicht, wenn er mit Feuchtigkeit oder Nässe in Berührung kommt (etwa bei Abplatzungen, die bis zum Leichtkern reichen). Somit kann ein Beton mit einer guten Oberflächenqualität erhalten werden. Der Leichtkern kann aus einem Integralschaum bestehen, wodurch seine mechanische Stabilität verbessert wird.

Bei einer bevorzugten Ausführungsform wird als Ummantelungsmaterial ein den Schalungselementkern verstärkendes Verstärkungsmaterial verwendet. Um den Schalungselementkern zu verstärken, weist das Verstärkungsmaterial vorzugsweise bessere mechanische Eigenschaften, insbesondere eine höhere Festigkeit, auf, als das Material des Schalungselementkerns. Ein Schalungselementkern aus Birkensperrholz kann beispielsweise durch Ummanteln mit einem langfaserverstärkten Thermoplasten (LFT) verstärkt werden.

Wird ein solches Verstärkungsmaterial als Ummantelungsmaterial verwendet, können im Schalungselementkern besonders günstige Materialien mit geringer mechanischer Stabilität und geringer Festigkeit, wie beispielsweise ein Weichholz oder ein geschäumtes Polypropylen, eingesetzt werden.

Bei einer bevorzugten Ausführungsform wird als Ummantelungsmaterial ein, vorzugsweise faserverstärkter, thermoplastischer Kunststoff verwendet. Thermoplastische Kunststoffe lassen sich gut mittels Fließpressen verarbeiten und weisen gute mechanische Eigenschaften auf. Durch die Verstärkung mit Verstärkungsfasern können die mechanischen Eigenschaften, insbesondere die Festigkeit, des Materials weiter verbessert werden. Die Verstärkungsfasern des faserverstärkten thermoplastischen Kunststoffs können beispielsweise Glasfasern oder Karbonfasern sein.

Bei einer bevorzugten Ausführungsform enthält der faserverstärkte thermoplastische Kunststoff des Ummantelungsmaterials Endlosfasern und/oder Langfasern. Die Langfasern haben bevorzugt eine Länge zwischen 2 mm und 25 mm, mehr bevorzugt zwischen 10 mm und 15 mm. Das erfindungsgemäße Verfahren erlaubt den Einsatz von solchen Langfasern, da die Langfasern durch die relativ geringen Druck- und Scherkräfte beim Fließpressen, insbesondere beim Extrudieren, vorzugsweise nicht beschädigt oder zerkleinert werden. Die Langfasern werden vorzugsweise vor dem Fließpressen dem Ummantelungsmaterial beigemischt.

Die Endlosfasern liegen bevorzugt als Rollenware vor. Zur weiteren Verstärkung des Schalungselements kann ein Endlosfasern enthaltendes Fasergelege beispielsweise direkt in der Form oder auf dem Schalungselementkern platziert werden. Beim Fließpressen kann das Fasergelege von dem Ummantelungsmaterial umschlossen und/oder in das Ummantelungsmaterial eingebettet werden. Es können auch mehrere solche Fasergelege in der Form und/oder auf dem Schalungselementkern platziert werden.

Die an die Erfindung gestellte Aufgabe wird auch durch ein Schalungselement, aufweisend einen Schalungselementkern und eine Ummantelung aus einem Ummantelungsmaterial, gelöst, wobei die Ummantelung durch Fließpressen gebildet ist. Die oben im Zusammenhang mit dem Verfahren zur Herstellung eines Schalungselements beschriebenen Merkmale, technischen Effekte und Vorteile sind entsprechend auf das Schalungselement übertragbar.

Die vorliegende Offenbarung bezieht sich weiters auf ein Schalungselement, aufweisend einen Schalungselementkern und eine Ummantelung aus einem Ummantelungsmaterial, wobei der Schalungselementkern ein Leichtkern ist.

Bei einer bevorzugten Ausführungsform des erfindungsgemäßen Schalungselements ist der Schalungselementkern ein Leichtkern. Der Leichtkern dient hier insbesondere als Füllung. Bevorzugt ist daher ein Leichtkern aus einem möglichst leichten und kostengünstigen Material. Die mechanischen Eigenschaften des Leichtkerns sind dabei von untergeordneter Bedeutung.

Bei einer bevorzugten Ausführungsform enthält der Schalungselementkern Holz und/oder einen, vorzugsweise geschäumten oder kompakten, Kunststoff. Diese Materialien sind allesamt sehr leicht und kostengünstig. Sie sind zudem auch gut nagelbar, vorzugsweise mit Holznägeln. Die Nagelbarkeit von Schalungselementen kann insbesondere dann bedeutsam sein, wenn in einer Betonschalung Aussparungskästen, beispielsweise für Fenster, Steckdosen, oder ähnliches vorgesehen sind. Die Aussparungskästen können dann an den Schalungselementen festgenagelt werden. Für härtere Schalungselementkerne, beispielsweise auf Organoblech, wären Holznägel ungeeignet, man müsste auf teurere Stahlnägel zurückgreifen.

Zwischen dem Holz des Schalungelementkerns und dem Ummantelungsmaterial kann eine sehr starke Haftung auftreten. Es ist auch möglich, dass das Ummantelungsmaterial mit dem Holz des Schalungselementkerns eine chemische Bindung eingeht. Die Haftung zwischen Schalungselementkern und Ummantelungsmaterial kann weiters durch einen Haftvermittler verbessert werden.

Bei einer bevorzugten Ausführungsform enthält das Ummantelungsmaterial einen Kunststoff und der Schalungselementkern enthält einen Kunststoff, wobei der Kunststoff des Ummantelungsmaterials und der Kunststoff des Schalungselementkerns das gleiche Polymer enthalten. Beispielsweise können sowohl der Schalungselementkern, als auch das Ummantelungsmaterial, optional faserverstärktes, Polypropylen enthalten. Ein solches Schalungselement kann dann vollständig recycelt werden, ohne zuvor das Ummantelungsmaterial von dem Schalungselementkern zu trennen.

Bei einer bevorzugten Ausführungsform enthält der Schalungselementkern recyceltes Material. Das recycelte Material kann recycelter Kunststoff oder recyceltes Holz sein, beispielsweise in Form einer Spanplatte oder eines Holz-Kunststoff-Verbundmaterials. Das recycelte Material kann teilweise oder vollständig aus recycelten Schalungselementen, insbesondere aus recycelten Schalungselementen gemäß der Erfindung, bestehen.

Bei einer bevorzugten Ausführungsform wird als Ummantelungsmaterial ein den Schalungselementkern verstärkendes Verstärkungsmaterial verwendet. Das Verstärkungsmaterial weist vorzugsweise bessere mechanische Eigenschaften, insbesondere eine höhere Festigkeit, auf, als das Material des Schalungselementkerns.

Bei einer bevorzugten Ausführungsform wird als Ummantelungsmaterial ein, vorzugsweise faserverstärkter, thermoplastischer Kunststoff verwendet.

Bei einer bevorzugten Ausführungsform enthält der faserverstärkte thermoplastische Kunststoff des Ummantelungsmaterials Endlosfasern und/oder Langfasern.

Bei einer bevorzugten Ausführungsform enthält das Ummantelungsmaterial mit Langfasern und Endlosfasern verstärktes Polypropylen.

Bei einer bevorzugten Ausführungsform sind die Vorderseite und die Rückseite der Ummantelung über mit Ummantelungsmaterial gefüllte Aussparungen des Schalungselementkerns miteinander verbunden. Durch die Verbindung der Vorder- und Rückseite des Schalungselementkerns erhält das Schalungselement insgesamt eine verbesserte Festigkeit.

Bei einer bevorzugten Ausführungsform ist die Flächendichte des Schalungselements kleiner als 10 kg/m².

Bei einer bevorzugten Ausführungsform enthält das Ummantelungsmaterial ein Additiv, insbesondere einen Schlagzähmodifikator, der die Schlagzähigkeit des Ummantelungsmaterials erhöht und damit die Nagelbarkeit des Schalungselements verbessert. Insbesondere wird durch die Erhöhung der Schlagzähigkeit die Tendenz des Ummantelungsmaterials verringert, beim Nageln von dem Schalungselementkern abzusplittern.

Das erfindungsgemäße Schalungselement kann in verschiedensten Schalungssystemen mit oder ohne Rahmen eingesetzt werden, beispielsweise in einer Wandschalung oder einer Deckenschalung.

Die Aufgabe wird auch durch eine Rahmenschalung, beispielsweise eine Wand- oder Deckenschalung, aufweisend einen Rahmen, vorzugsweise aus Metall, und ein erfindungsgemäßes Schalungselement, gelöst.

Bei einer bevorzugten Ausführungsform wird das Schalungselement mithilfe zumindest eines aus dem Ummantelungsmaterial bestehenden, von der Rückseite des Schalungselements senkrecht abstehenden Befestigungselements mit dem Rahmen verbunden.

Vorzugsweise sind mehrere Befestigungselemente vorgesehen. Die mehreren Befestigungselemente sind vorzugsweise in regelmäßigen Abständen nahe der Kante des Schalungselements rund um das Schalungselement angeordnet und können beispielsweise Schraubdome und/oder Thermonieten sein. Da sich die Befestigungselemente ausschließlich an der Rückseite des Schalungselements befinden, können Nieten und Schrauben an der Vorderseite des Schalungselements weitgehend vermieden werden. Die Vorderseite des Schalungselements kann daher besonders leicht von dem ausgehärteten Beton getrennt werden. Durch Schrauben oder Nieten verursachte Unebenheiten in der Betonoberfläche können so vermieden werden.

Bei einer bevorzugten Ausführungsform ist das Schalungselement dafür vorgesehen, passgenau in einen Rahmen eingefügt zu werden. Vorzugsweise wird zur Abdichtung zwischen Schalungselement und Rahmen dann nur eine geringe Menge, oder vorzugsweise gar kein Dichtmittel benötigt. Als Dichtmittel kommt im Stand der Technik häufig Dichtsilikon zum Einsatz. Das passgenaue Einfügen in den Rahmen kann beispielsweise dadurch ermöglicht werden, dass das Schalungselement sich von der Vorderseite zur Rückseite hin verjüngt. Die Verjüngung wird durch eine entsprechende Ausführung der Form erreicht, sodass die Kantenfläche des Schalungselementkerns nahe der Vorderseite des Schalungselements mit mehr Ummantelungsmaterial bedeckt ist, als nahe der Rückseite des Schalungselements.

Alternativ kann das passgenaue Einfügen in den Rahmen durch einen Schnappmechanismus ermöglicht werden. Dafür können an der Außenkante der Vorderseite des Schalungselements, insbesondere im Ummantelungsmaterial, eine oder mehrere Aussparungen vorgesehen sein. Am Rahmen kann bzw. können an den entsprechenden Stellen eine oder mehrere in die Aussparungen des Schalungselements passende Vorsprünge angeordnet sein, sodass das Schalungselement passgenau in den Rahmen eingeschnappt werden kann.

Bei einer bevorzugten Ausführungsform wird beim Fließpressen aus dem Ummantelungsmaterial Rahmen für das Schalungselement geformt. Vorzugsweise befindet sich der Rahmen ausschließlich auf der Rückseite des Schalungselements. Der Rahmen umrahmt vorzugsweise die Rückseite des Schalungselements an der Außenkante der Rückseite. Der Rahmen kann mit einer, ebenfalls aus dem Ummantelungsmaterial geformten, Stützstruktur verbunden sein. Der Rahmen kann die Steifigkeit des Schalungselements erhöhen und kann zur Verbindung des Schalungselements mit weiteren Schalungselementen dienen.

Die Erfindung wird nachstehend anhand der in den Zeichnungen dargestellten Ausführungsbeispiele weiter erläutert.
Fig. 1 zeigt ein schematisches Flussdiagramm eines erfindungsgemäßen Verfahrens zum Herstellen eines Schalungselements.
Fig. 2 zeigt eine erste beispielhafte Ausführungsform des erfindungsgemäßen Schalungselements.
Fig. 3 zeigt einen Schnitt durch das in Fig. 2 dargestellte Schalungselement.
Fig 4 zeigt eine zweite beispielhafte Ausführungsform des erfindungsgemäßen Schalungselements, die mehrere verschiedene Befestigungselemente aufweist.
Fig. 5 zeigt einen Schnitt durch das in Fig. 4 dargestellte Schalungselement.
Fig 6 zeigt eine dritte beispielhafte Ausführungsform des erfindungsgemäßen Schalungselements, die zusätzlich eine Stützstruktur aufweist.
Fig. 7 zeigt einen Schnitt durch das in Fig. 6 dargestellte Schalungselement.
Fig. 8 zeigt eine Draufsicht auf die Rückseite des in Fig. 6 dargestellten Schalungselements.
Fig 9 zeigt eine vierte beispielhafte Ausführungsform des erfindungsgemäßen Schalungselements, die zusätzlich einen integrierten Rahmen aufweist.
Fig. 10 zeigt einen Schnitt durch das in Fig. 9 dargestellte Schalungselement.
Fig. 11 zeigt eine beispielhafte Ausführungsform der erfindungsgemäßen Rahmenschalung, geeignet zur Verwendung als Deckenschalung.
Fig. 12 zeigt einen Schnitt durch die in Fig. 11 dargestellte Rahmenschalung.
Fig. 13 zeigt eine beispielhafte Ausführungsform der erfindungsgemäßen Rahmenschalung, geeignet zur Verwendung als Wandschalung.
Fig. 14 zeigt einen Schnitt durch die in Fig. 13 dargestellte Rahmenschalung.

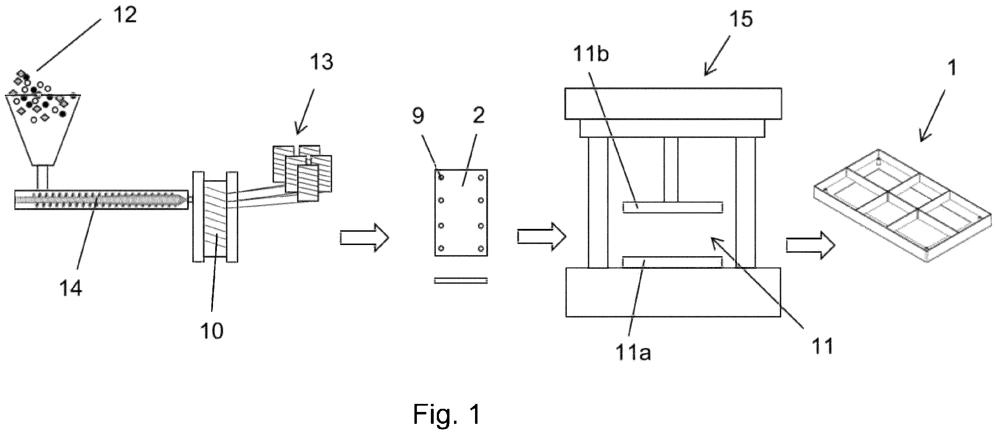

Bei dem in Fig. 1 dargestellte Verfahren wird in einem ersten Schritt ein thermoplastischer Kunststoff 12, vorzugsweise ein Polypropylen, aufgeschmolzen und in einem Extruder 14 mit Langfasern, die vorzugsweise Glasfasern und/oder Karbonfasern sind, vermischt. Die Langfasern werden vorzugsweise im ersten Drittel des Extruders 14 zugegeben. Dem Extrudat, also dem Gemisch aus thermoplastischem Kunststoff 12 und Langfasern, werden Endlosfasern 13, die vorzugsweise Glasfasern und/oder Karbonfasern sind, beigemengt, um ein Ummantelungsmaterial 10 zu erhalten. Die Langfasern haben vorzugsweise eine Länge zwischen 10 mm und 15 mm.

Ein Schalungselementkern 2, beispielsweise eine Birkensperrholzplatte, wird mit mehreren in einem regelmäßigen Muster angeordneten Aussparungen 9 versehen, vorzugsweise durch Bohren oder Fräsen. In einer Vertikalpresse 15 wird der Schalungselementkern 2 mit dem Ummantelungsmaterial 10 ummantelt. Die Vertikalpresse 15 enthält eine Form 11, welche ein Unterteil 11a sowie ein Oberteil 11b aufweist, die gemeinsam die Außenkonturen des fertigen Schalungselements 1 definieren. Der Schalungselementkern 2 mit Aussparungen 9 wird im Unterteil 11a der Form 11 platziert. Ebenso wird eine definierte Menge des Ummantelungsmaterials 10 in der Form 11 platziert, die ausreicht, um die Hohlräume der geschlossenen Form 11 mit eingelegtem Schalungselementkern 2 vollständig zu füllen. Die definierte Menge des Ummantelungsmaterials 10 wird über dem Schalungselementkern 2 platziert werden. Durch Zusammenführen des Unterteils 11a und des Oberteils 11b der Form 11 wird ein Druck von ca. 50 bar auf das Ummantelungsmaterial 10 ausgeübt, wodurch dieses zum Fließen gebracht wird und sich gleichmäßig in den Hohlräumen der Form 11 verteilt. Das Ummantelungsmaterial 10 ummantelt dabei den Schalungselementkern 2 und füllt auch die Aussparungen 9 aus. Das Fließpressen wird vorzugsweise im Wesentlichen bei einer Temperatur von 280 °C durchgeführt. Nachdem das Ummantelungsmaterial 10 in der Form 11 erstarrt ist, wird die Form 11 wieder geöffnet und das fertige Schalungselement 1 wird aus der Form 11 entfernt.

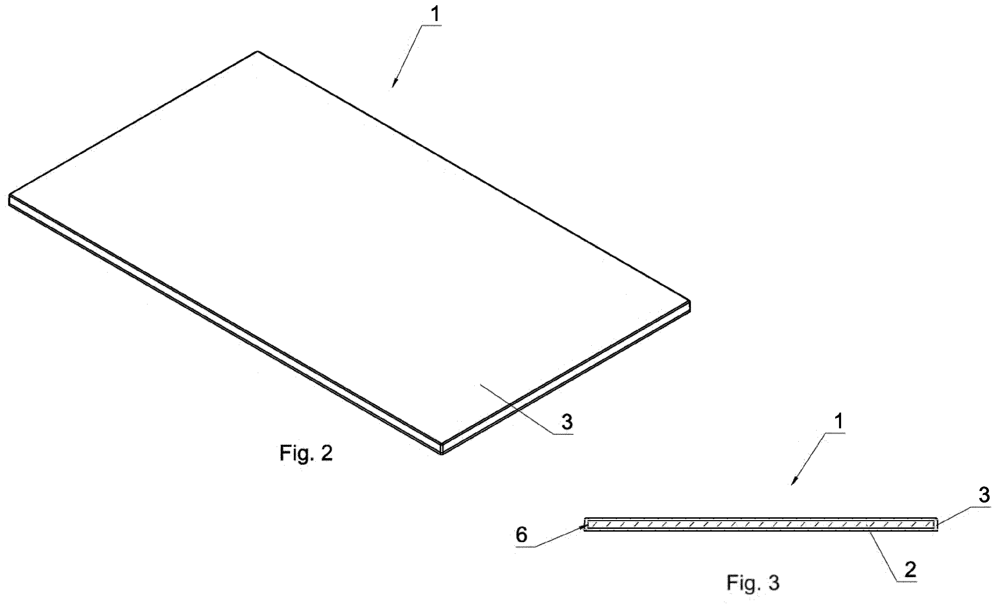

Bei dem in Fig. 2 und Fig. 3 dargestellten Schalungselement bildet das Ummantelungsmaterial 10 eine vollständige Ummantelung 3 um den Schalungselementkern 2, sodass die gesamte Oberfläche des Schalungselementkerns 2, insbesondere auch dessen Kantenfläche 6, ummantelt ist und somit vor Feuchte und vor mechanischer Beschädigung geschützt ist.

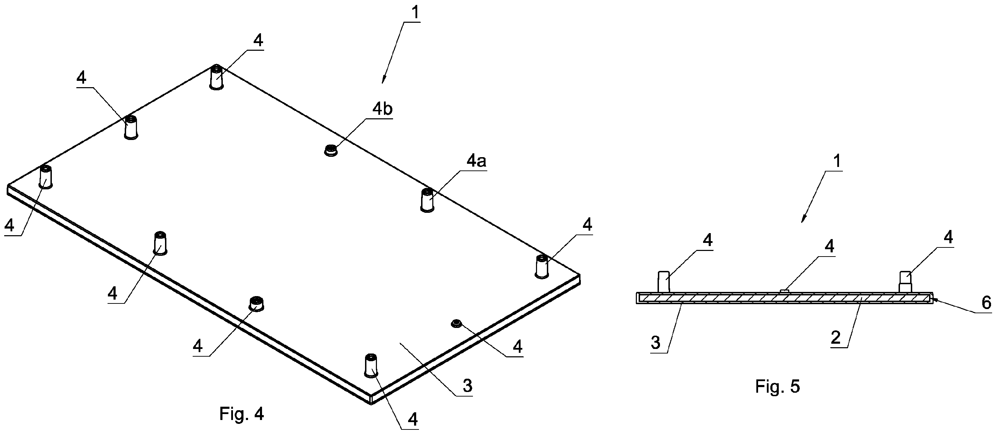

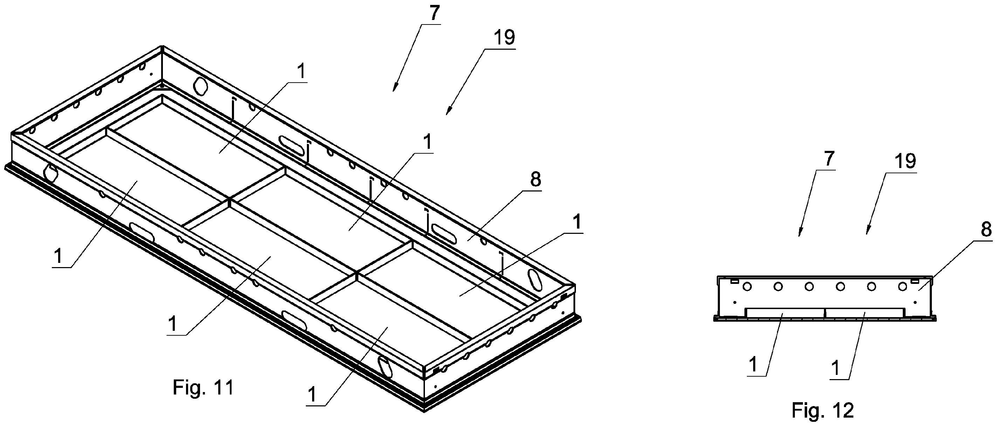

Das in Fig. 4 und Fig. 5 dargestellte Schalungselement 1 weist zusätzlich mehrere Befestigungselemente 4 auf, mithilfe derer das Schalungselement 1 beispielsweise an einem Rahmen 8 befestigt werden kann, wie in Fig. 11-14 ersichtlich. In Fig. 4 und Fig. 5 sind mehrere verschiedene Ausführungen der Befestigungselemente 4 zu sehen. Die langen Befestigungselemente 4a eignen sich insbesondere zur Befestigung mittels Thermonieten bzw. Ultraschallnieten. Sowohl die langen Befestigungsnieten 4a , als auch die kurzen Befestigungselemente 4b können als Schraubdome genutzt werden, an welchen der Rahmen 8 festgeschraubt werden kann.

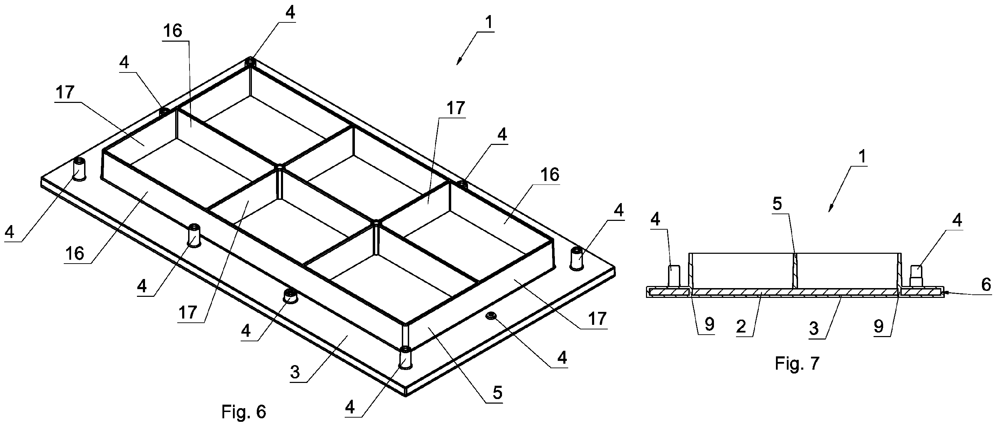

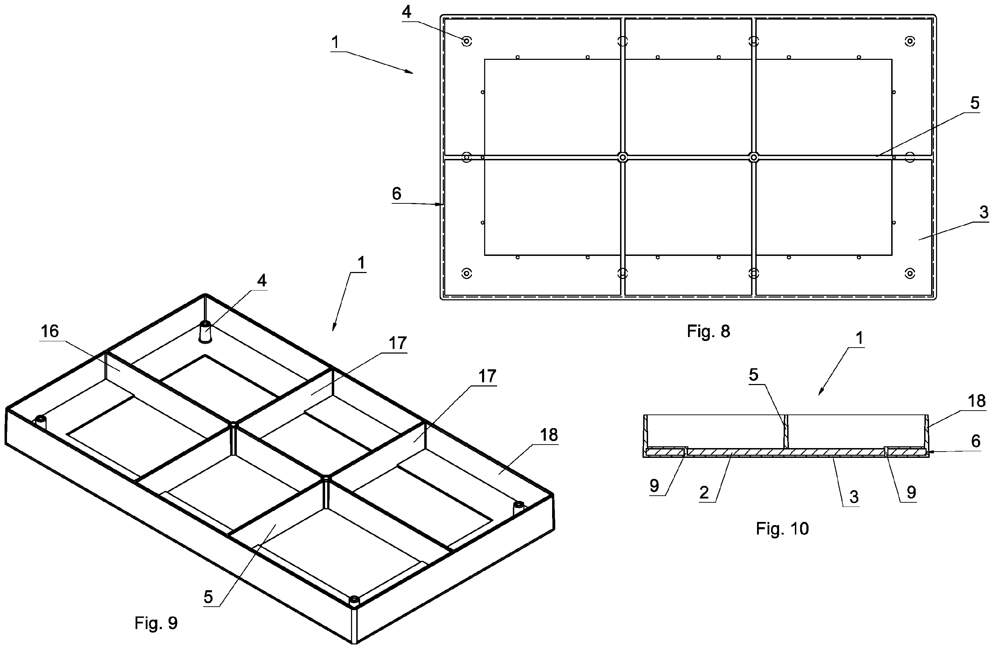

Das in Fig. 6 Fig. 7 und Fig. 8 dargestellte Schalungselement 1 weist zusätzlich eine Stützstruktur 5 auf, die mehrere Längsrippen 16 und mehreren Querrippen 17 aufweist. Die Stützstruktur dient dazu, die Formstabilität und Festigkeit des Schalungselements 1 zu verbessern. Die Befestigungselemente 4 und die Stützstruktur 5 sind ausschließlich auf der Rückseite des Schalungselements 1 angeordnet. Die Vorderseite des Schalungselements 1 ist dagegen glatt, sodass die Trennung des Schalungselements von dem Beton sehr einfach ist und sodass die Betonoberfläche keine Makel aufweist, welche auf makroskopische Strukturen auf der Vorderseite des Schalungselements zurückzuführen wären.

Das in Fig. 9 und Fig. 10 dargestellte Schalungselement 1 weist zusätzlich einen integrierten Rahmen 18 auf, der aus dem Ummantelungsmaterial 10 im Zuge des Fließpressens gefertigt wurde. Der integrierte Rahmen 18 ist mit den Längsrippen 16 und den Querrippen 17 der Stützstruktur 5 verbunden. Der integrierte Rahmen 18 kann die Steifigkeit des Schalungselements 1 erhöhen und kann zur Verbindung des Schalungselements 1 mit weiteren Schalungselementen dienen.

Insbesondere in Fig. 7 und Fig. 10 ist ersichtlich, dass die Vorderseite und die Rückseite der Ummantelung 3 über mehrere Aussparungen 9 im Schalungselementkern 2, welche mit Ummantelungsmaterial 10 ausgefüllt sind, miteinander verbunden sind. Das verleiht dem Schalungselement 1 zusätzliche Stabilität.

Die in Fig. 11 und Fig. 12 abgebildete Rahmenschalung 7 ist insbesondere für eine Deckenschalung geeignet. Sie weist einen Rahmen 8, vorzugsweise aus Metall, auf, in den mehrere Schalungselemente 1 eingelegt und vorzugsweise mithilfe von Befestigungselementen 4 an dem Rahmen 8 befestigt sind. Abgebildet ist ein einzelnes Deckenelement 19. Eine Deckenschalung kann aus mehreren Deckenelementen 19 bestehen.

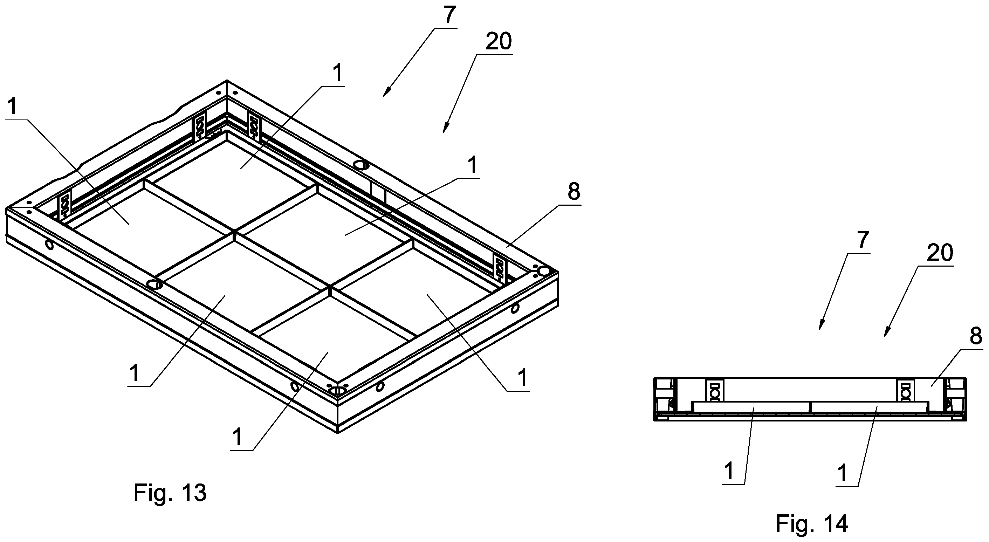

Die in Fig. 13 und Fig. 14 abgebildete Rahmenschalung 7 ist insbesondere für eine Wandschalung geeignet. Sie weist einen Rahmen 8, vorzugsweise aus Metall, auf, in den mehrere Schalungselemente 1 eingelegt und vorzugsweise mithilfe von Befestigungselementen 4 an dem Rahmen 8 befestigt sind. Abgebildet ist ein einzelnes Wandelement 20. Eine Wandschalung kann aus mehreren Wandelementen 20 bestehen.

### Bezugszeichenliste:

1 Schalungselement
2 Schalungselementkerns
3 Ummantelung
4 Befestigungselement
4a langes Befestigungselement
4b kurzes Befestigungselement
5 Stützstruktur
6 Kantenfläche des Schalungselementkerns
7 Rahmenschalung
8 Rahmen
9 Aussparung
10 Ummantelungsmaterial
11 Form
12 Kunststoff
13 Endlosfasern
14 Extruder
15 Vertikalpresse
16 Längsrippe
17 Querrippe
18 integrierter Rahmen
19 Deckenelement
20 Wandelement

## Patentansprüche

1. Verfahren zum Herstellen eines Schalungselements (1) mit den Schritten
Anordnen eines Schalungselementkerns (2) in einer Form (11),
Füllen der Form (11) mit einem Ummantelungsmaterial (10) und Ummanteln des Schalungselementkerns (2) mit dem Ummantelungsmaterial (10), wodurch das Schalungselement (1) gebildet wird,
**dadurch gekennzeichnet, dass**
das Füllen der Form (11) und das Ummanteln des Schalungselementkerns (2) durch Fließpressen bewerkstelligt wird.

2. Verfahren nach Anspruch **1, dadurch gekennzeichnet, dass** das Ummantelungsmaterial (10) beim Fließpressen durch Aussparungen (9) des Schalungselementkerns (2) von einer Vorderseite des Schalungselements (1) zu einer Rückseite des Schalungselements (1) oder umgekehrt fließt.

3. Verfahren nach einem der Ansprüche 1 oder 2, **dadurch gekennzeichnet, dass** beim Fließpressen mindestens ein, vorzugsweise im Wesentlichen senkrecht von der Rückseite des Schalungselements (1) abstehendes, Befestigungselement (4) aus dem Ummantelungsmaterial (10) geformt wird.

4. Verfahren nach einem der Ansprüche 1 bis 3, **dadurch gekennzeichnet, dass** beim Fließpressen an der Rückseite des Schalungselements (1) eine Stützstruktur (5) aus dem Ummantelungsmaterial (10) geformt wird.

5. Verfahren nach einem der Ansprüche 1 bis 4, **dadurch gekennzeichnet, dass** zumindest eine Kantenfläche (6) des Schalungselementkerns (2) beim Fließpressen vollflächig mit dem Ummantelungsmaterial (10) ummantelt wird.

6. Verfahren nach einem der Ansprüche 1 bis 5, **dadurch gekennzeichnet, dass** als Ummantelungsmaterial (10) ein den Schalungselementkern verstärkendes Verstärkungsmaterial verwendet wird.

7. Verfahren nach einem der Ansprüche 1 bis 6, **dadurch gekennzeichnet, dass** als Ummantelungsmaterial (10) ein, vorzugsweise faserverstärkter, thermoplastischer Kunststoff (12) verwendet wird.

8. Verfahren nach Anspruch 7, **dadurch gekennzeichnet, dass** der faserverstärkte thermoplastische Kunststoff des Ummantelungsmaterials (10) Endlosfasern und/oder Langfasern enthält.

9. Schalungselement (1), aufweisend einen Schalungselementkern (2) und eine Ummantelung (3) aus einem Ummantelungsmaterial (10), **dadurch gekennzeichnet, dass** die Ummantelung (3) durch Fließpressen gebildet ist.

10. Schalungselement (1) nach Anspruch 9, **dadurch gekennzeichnet, dass** der Schalungselementkern (2) ein Leichtkern ist.

11. Schalungselement (1) nach Anspruch 9 oder 10, **dadurch gekennzeichnet, dass** der Schalungselementkern (2) Holz und/oder einen, vorzugsweise geschäumten, Kunststoff enthält.

12. Schalungselement (1) nach einem der Ansprüche 9 bis 11, **dadurch gekennzeichnet, dass** das Ummantelungsmaterial (10) einen Kunststoff (12) enthält und der Schalungselementkern (2) einen Kunststoff enthält, wobei der Kunststoff (12) des Ummantelungsmaterials (10) und der Kunststoff des Schalungselementkerns (2) das gleiche Polymer enthalten.

13. Schalungselement (1) nach einem der Ansprüche 9 bis 12, **dadurch gekennzeichnet, dass** der Schalungselementkern (2) recyceltes Material enthält.

14. Schalungselement (1) nach einem der Ansprüche 9 bis 13, **dadurch gekennzeichnet, dass** die Flächendichte des Schalungselements (1) kleiner als 10 kg/m² ist.

15. Rahmenschalung (7), aufweisend einen Rahmen (8), vorzugsweise aus Metall, und ein Schalungselement (1) nach einem der Ansprüche 9 bis 14.
